# EUROPEAN PATENT SPECIFICATION

(11) **EP 4 075 305 B1**
(45) Date of publication and mention of the grant of the patent: **23.07.2025**
(21) Application number: 20937411.5
(22) Date of filing: 24.11.2020
(51) Int. Cl.: G06F 17/00, G09B 29/00, G01C 21/00, G05D 1/00

(54) **METHOD FOR ESTABLISHING MAP TRAVERSAL BLOCK OF GLOBAL GRID MAP, CHIP IMPLEMENTING THE METHOD, AND ASSOCIATED MOBILE ROBOT**
VERFAHREN ZUR ERSTELLUNG EINES KARTENDURCHQUERUNGSBLOCKS EINER GLOBALEN GITTERKARTE, CHIP ZUR DURCHFÜHRUNG DES VERFAHRENS UND ZUGEHÖRIGER MOBILER ROBOTER
PROCÉDÉ DE CRÉATION D'UN BLOC DE TRAVERSÉE DE CARTE D'UNE GRILLE GLOBALE, PUCE POUR LA MISE EN OEUVRE DE LA MÉTHODE ET ROBOT MOBILE ASSOCIÉ

(30) Priority: 26.05.2020 CN 202010456789
(43) Date of publication of application: 19.10.2022
(73) Proprietor: Amicro Semiconductor Co., Ltd., Hengqin New District, Zhuhai City Guangdong 519000 (CN)
(72) Inventor: LI, Ming, Zhuhai, Guangdong 519000 (CN); LAI, Qinwei, Zhuhai, Guangdong 519000 (CN); LI, Yongyong, Zhuhai, Guangdong 519000 (CN)
(74) Representative: Dehns Germany Partnerschaft mbB
(86) International application number: PCT/CN2020/131197
(87) International publication number: WO 2021/238115

(56) References cited:
- EP-A1- 3 506 212
- CN-A- 106 407 408
- CN-A- 107 316 308
- CN-A- 107 862 048
- CN-A- 108 319 655
- CN-A- 111 631 639
- US-A1- 2007 262 988
- US-A1- 2019 251 717

## Description

### Technical Field

The disclosure relates to the technical field of map region division, and in particular to a method for establishing map traversal blocks of a global grid map, a chip, and a mobile robot.

### Background Art

A prerequisite for a cleaning robot to perform cleaning tasks efficiently is to have a map describing the surrounding environment. In the aspect of establishment of the environment map, the robot can acquire environment information by adopting modes such as boundary learning through a sensor and combining the existing Simultaneous Localization and Mapping (SLAM) technology, and a grid map describing environment characteristics is established on this basis. After the map is established, the sweeping robot can perform cleaning work.

With the improvement of the requirement of people on the working efficiency of the cleaning robot, especially in some large-scale indoor global environments, the grid information quantity required to be collected by the sweeping robot is greatly increased, so that software resources for constructing and using the grid map are increased, and the efficiency of the robot for navigating by using the global grid map is reduced. Relevant prior art is know from US 2019/251717 A1 and EP 3 506 212 A1.

### Summary

A method for establishing map traversal blocks of a global grid map includes: S1, side lengths of the map traversal blocks are set according to a size of the global grid map, so as to enable the map traversal blocks to occupy a sufficiently large grid region in the global grid map; S2, a coverage number of map traversal blocks in each of a global coordinate axis direction of the global grid map is calculated in combination with a ratio relationship between the size of the global grid map and the side lengths of the map traversal blocks determined in S1; and S3, according to a constraint effect of the coverage number of the map traversal blocks determined in S2, a row-by-row and column-by-column accumulated operation is carried out on the side lengths of the map traversal blocks determined in S1 to calculate mapping coordinates of each of a map traversal block, so as to enable the map traversal blocks to be established in each row and each column of the global grid map, and each of the map traversal block is formed by combining corresponding grids according to the mapping coordinates and the side length of the map traversal block.

Optionally, map traversal blocks of each row of the global grid map are arranged in a horizontal coordinate axis direction and projections of the map traversal blocks in a vertical coordinate axis direction are overlapped, and map traversal blocks of each column of the global grid map are arranged in the vertical coordinate axis direction and projections of the map traversal blocks in the horizontal coordinate axis direction are overlapped; and the global coordinate axis directions include the vertical coordinate axis direction and the horizontal coordinate axis direction. In the disclosure, the grids on the global map are combined row by row and column by column and subjected to block processing to form regularly distributed map traversal blocks.

Optionally, S1 specifically includes: S11, a standard side length is preset; S12, whether a length and a width of the global grid map are both greater than 2 times of the standard side length or not is judged, in a case that the length and the width of the global grid map are both greater than 2 times of the standard side length, the side length of the map traversal block is set as the standard side length, otherwise, the process proceeds to S13; S13, whether the length and the width of the global grid map are both greater than the standard side length or not is judged, in a case that the length and the width of the global grid map are both greater than the standard side length, the side length of the map traversal block is set to be half of the standard side length, otherwise, the process proceeds to S14; and S14, the side length of the map traversal block is set to be one fourth of the standard side length, and the global grid map is a rectangular map region.

Optionally, S2 specifically includes: a ratio of an effective length of the global grid map to the side lengths of the map traversal blocks is calculated, and plus-one processing is carried out to obtain a coverage number of the map traversal blocks in the vertical coordinate axis direction of the global grid map; and a ratio of an effective width of the global grid map to the side lengths of the map traversal blocks is calculated, and plus-one processing is carried out to obtain a coverage number of the map traversal blocks in the horizontal coordinate axis direction of the global grid map. Therefore, the map traversal blocks of the coverage number can completely mark the environment information of the global working region.

Optionally, S3 specifically includes: S31, by taking a grid position at a lower left corner of the global grid map as a reference original point, the process proceeds to S32; S32, starting from the reference original point, a coordinate of the reference original point on the vertical coordinate axis plus the side length of the map traversal block to calculate and determine a mapping coordinate of a currently determined map traversal block on the vertical coordinate axis, meanwhile, it is determined that a mapping coordinate of a currently determined map traversal block on the horizontal coordinate axis is equal to a coordinate of the reference original point on the horizontal coordinate axis, then the process proceeds to S33, and the reference original point is a position with a minimum coordinate value on each of the global coordinate axis of the global grid map; S33, whether a number of the map traversal blocks of which the mapping coordinates have been determined in the vertical coordinate axis direction is smaller than the coverage number of the map traversal blocks in the vertical coordinate axis direction of the global grid map or not is judged, in a case that the mapping coordinates have been determined in the vertical coordinate axis direction is smaller than the coverage number of the map traversal blocks in the vertical coordinate axis direction of the global grid map, the process proceeds to S34, otherwise, the process proceeds to S35; S34, the mapping coordinate of the currently determined map traversal block on the vertical coordinate axis plus the side length of the map traversal block to calculate and determine a mapping coordinate of an adjacent map traversal block in the same vertical coordinate axis direction on the vertical coordinate axis, meanwhile, it is determined that a mapping coordinate of the adjacent map traversal block in the same vertical coordinate axis direction on the horizontal coordinate axis is the same as the mapping coordinate of the currently determined map traversal block on the horizontal coordinate axis, then the process returns to S33, so that mapping coordinates of each of the map traversal block in the same vertical coordinate axis direction are determined row by row under a constraint effect of a coverage number in the same vertical coordinate axis direction; S35, the mapping coordinate of the currently determined map traversal block on the horizontal coordinate axis plus the side length of the map traversal block to calculate and determine a mapping coordinate of the adjacent map traversal block in the same horizontal coordinate axis direction on the horizontal coordinate axis, meanwhile, it is determined that a mapping coordinate of the adjacent map traversal block in the same horizontal coordinate axis direction on the vertical coordinate axis is the same as the mapping coordinate of the currently determined map traversal block on the vertical coordinate axis, then the process proceeds to S36, and mapping coordinates of each of the map traversal block in the same horizontal coordinate axis direction are determined column by column under a constraint effect of a coverage number in the same horizontal coordinate axis direction; S36, whether a number of the map traversal blocks of which the mapping coordinates have been determined in the horizontal coordinate axis direction is smaller than the coverage number of the map traversal blocks in the horizontal coordinate axis direction of the global grid map or not is judged, in a case that the number of the map traversal blocks of which the mapping coordinates have been determined in the horizontal coordinate axis direction is smaller than the coverage number of the map traversal blocks in the horizontal coordinate axis direction of the global grid map, the process returns to S33, otherwise, it is determined that the mapping coordinates of each of the map traversal block in the global grid map have been calculated row by row and column by column, so that the map traversal blocks are established in each row and each column of the global grid map, and a block processing of the global grid map is completed.

Optionally, S3 specifically includes: S31, by taking the grid position at the lower left corner of the global grid map as a reference original point, the process proceeds to S32; S32, starting from the reference original point, a coordinate of the original point on the vertical coordinate axis plus the side length of the map traversal blocks to calculate and determine the mapping coordinate of the adjacent map traversal block in the same horizontal coordinate axis direction on the horizontal coordinate axis, meanwhile, it is determined that the mapping coordinate of the currently determined map traversal block on the vertical coordinate axis is equal to the coordinate of the reference original point on the vertical coordinate axis, then the process proceeds to S33, and the reference original point is the position with the minimum coordinate value on each of the global coordinate axis of the global grid map; S33, whether the number of the map traversal blocks of which the mapping coordinates have been determined in the horizontal coordinate axis direction is smaller than the coverage number of the map traversal blocks in the horizontal coordinate axis direction of the global grid map or not is judged, in a case that the number of the map traversal blocks of which the mapping coordinates have been determined in the horizontal coordinate axis direction is smaller than the coverage number of the map traversal blocks in the horizontal coordinate axis direction of the global grid map, the process proceeds to S34, otherwise, the process proceeds to S35; S34, the mapping coordinate of the currently determined map traversal block on the horizontal coordinate axis plus the side length of the map traversal block to calculate and determine the mapping coordinate of the adjacent map traversal block in the same horizontal coordinate axis direction on the horizontal coordinate axis, meanwhile, it is determined that the mapping coordinate of the adjacent map traversal block in the same horizontal coordinate axis direction on the vertical coordinate axis is the same as the mapping coordinate of the currently determined map traversal block on the vertical coordinate axis, then the process returns to S33, so that the mapping coordinates of each of the map traversal block in the same horizontal coordinate axis direction are determined column by column under the constraint effect of the coverage number in the same horizontal coordinate axis direction; S35, the mapping coordinate of the currently determined map traversal block on the vertical coordinate axis plus the side length of the map traversal block to calculate and determine the mapping coordinate of the adjacent map traversal block in the same vertical coordinate axis direction on the vertical coordinate axis, meanwhile, it is determined that the mapping coordinate of the adjacent map traversal block in the same vertical coordinate axis direction on the horizontal coordinate axis is the same as the mapping coordinate of the currently determined map traversal block on the horizontal coordinate axis, and then the process proceeds to step 36, so that the mapping coordinates of each of the map traversal block in the same vertical coordinate axis direction are determined row by row under the constraint effect of the coverage number in the same vertical coordinate axis direction; S36, whether the number of the map traversal blocks of which the mapping coordinates have been determined in the vertical coordinate axis direction is smaller than the coverage number of the map traversal blocks in the vertical coordinate axis direction of the global grid map or not is judged, in a case that the number of the map traversal blocks of which the mapping coordinates have been determined in the vertical coordinate axis direction is smaller than the coverage number of the map traversal blocks in the vertical coordinate axis direction of the global grid map, the process returns to S33, otherwise, it is determined that the mapping coordinates of each of the map traversal block in the global grid map have been calculated row by row and column by column, so that the map traversal blocks are established in each row and each column of the global grid map, and the block processing of the global grid map is completed. The technical effects of the technical solution are the same as those of the abovementioned technical solution.

Optionally, a coordinate of a grid point traversed by a robot in the vertical coordinate axis direction is greater than or equal to the mapping coordinate of the map traversal block in the vertical coordinate axis direction, the coordinate of the grid point traversed by the robot in the vertical coordinate axis direction is smaller than or equal to a result obtained by subtracting one from the sum of the mapping coordinate of the map traversal block in the vertical coordinate axis direction and the side length of the map traversal block, a coordinate of the grid point traversed by the robot in the horizontal coordinate axis direction is greater than or equal to the mapping coordinate of the map traversal block in the horizontal coordinate axis direction, the coordinate of the grid point traversed by the robot on the horizontal coordinate axis direction is smaller than or equal to a result obtained by subtracting one from the sum of the mapping coordinate of the map traversal block in the horizontal coordinate axis direction and the side length of the map traversal block, it is determined that the grid point traversed by the robot is located in the map traversal block, so that when a cleaning robot traverses any grid in the map traversal block, a corresponding map traversal block is marked as a traversed map traversal block. According to the technical solution, the left boundary of the map traversal block is defined to be contained in its inner region, the right boundary of the map traversal block is defined to be included in an inner region of an adjacent map traversal block in the horizontal coordinate axis direction, the lower boundary of the map traversal block is defined to be included in its inner region, and the upper boundary of the map traversal block is defined to be included in the inner region of the adjacent map traversal block in the vertical coordinate axis direction.

A chip, having a built-in control program for dividing a global grid map constructed by a mobile robot in real time by executing the method for establishing the map traversal blocks.

A mobile robot, having the built-in chip.

### Brief Description of the Drawings

Fig. 1 is a flowchart of a method for establishing map traversal blocks of a global grid map according to an embodiment of the disclosure.
Fig. 2 is a flowchart of a method for setting side lengths of map traversal blocks according to an embodiment of the disclosure.
Fig. 3 is a flowchart of a method for calculating mapping coordinates of map traversal blocks according to an embodiment of the disclosure.

### Detailed Description of the Embodiments

The technical solutions in the embodiments of the disclosure will be described in detail below with reference to the drawings in the embodiments of the disclosure. The accompanying drawings are provided for further illustrating the embodiments. The accompanying drawings, which are incorporated in and constitute a part of the disclosure, mainly illustrate the embodiments, together with the description of the specification, serve to explain the principles of the embodiments. With these references, those of ordinary skill in the art will appreciate other possible implementation modes and advantages of the disclosure. The components in the figures are not drawn to scale, and similar reference numerals are generally used to denote similar components.

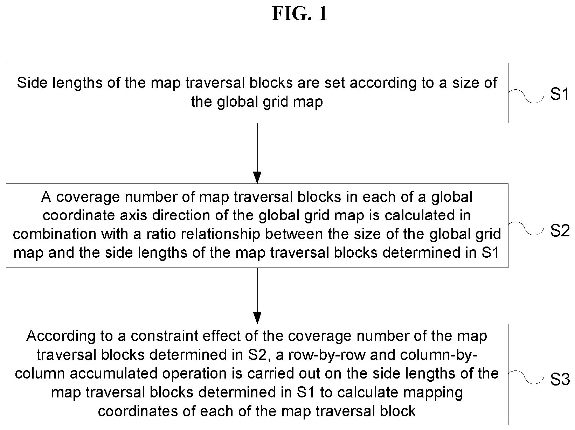

The embodiments of the disclosure disclose a method for establishing map traversal blocks of a global grid map, which can be executed before a cleaning robot carries out cleaning traversal on a global working region in a preset cleaning mode, so that the mobile robot can clean the global working region after block processing. As shown in Fig. 1, the method for establishing the map traversal blocks of the global grid map includes: S1, side lengths of the map traversal blocks are set according to a size (including a length and a width of the map) of the global grid map, so as to enable the map traversal blocks to occupy a grid region with a certain coverage range in the global grid map, and the grid region range is set by those skilled in art depending on the size of the cleaning robot and the working region in which it is located; S2, a coverage number of map traversal blocks in each of a global coordinate axis direction (including an X axis direction and a Y axis direction of the global coordinate system) of the global grid map is calculated in combination with a ratio relationship between the size of the global grid map and the side lengths of the map traversal blocks determined in S1, and the map traversal blocks are equivalent to sub-regions divided by the global grid map; S3, according to a constraint effect of the coverage number of the map traversal blocks determined in S2, a row-by-row and column-by-column accumulated operation is carried out on the side lengths of the map traversal blocks determined in S1 to calculate mapping coordinates of each of the map traversal block, so as to enable the map traversal blocks to be established in each row and each column of the global grid map, namely, the coverage number of the map traversal blocks can determine the boundary information of the global grid map, the distribution number and positions of the map traversal blocks in each row and each column of the global grid map are constrained, and each of the map traversal block is formed by combining corresponding grids according to the mapping coordinates and the side length of the map traversal block. The grids of each row and each column of the map are combined to establish the map traversal blocks with a certain size and quantity, each of the map traversal block corresponds to a small region occupied in an actual environment, and a general path of the robot can be planned as long as the size of the grids is set to be slightly larger, so that the calculation amount is reduced, and the robot can easily process map information. With the method for establishing the map traversal blocks of the global grid map, the large-scale global grid map is divided into a plurality of map sub-regions, therefore, the requirements on navigation localization computing power of the mobile robot and the requirements on the map data storage space are reduced, the operation resources of the grid surface in the global map are saved, and the data processing speed is accelerated. The method can be applied to the coverage rate and region area calculation of path planning, boundary walking and recharging path planning.

It is to be noted that map traversal blocks of each row of the global grid map are arranged in a horizontal coordinate axis direction and projections of the map traversal blocks in a vertical coordinate axis direction are overlapped, and map traversal blocks of each column of the global grid map are arranged in the vertical coordinate axis direction and projections of the map traversal blocks in the horizontal coordinate axis direction are overlapped; and the global coordinate axis directions include the vertical coordinate axis direction and the horizontal coordinate axis direction. In the disclosure, the grids on the global map are combined row by row and column by column to establish regularly distributed map traversal blocks. It is equivalent that the global map is divided into small map blocks.

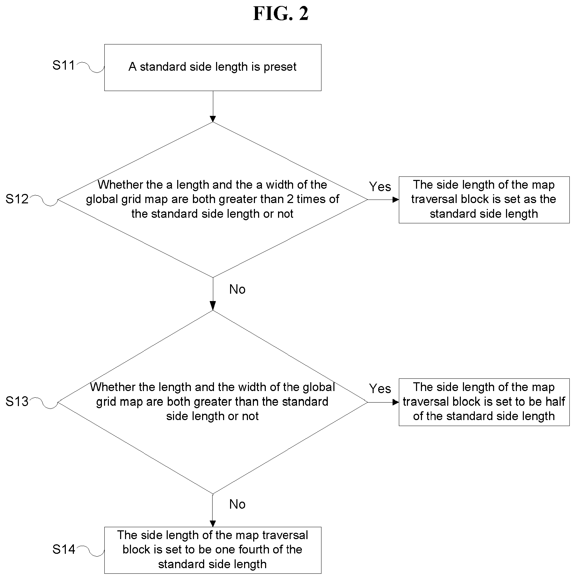

In the embodiment, as shown in the flowchart of the method for setting the side lengths of the map traversal blocks disclosed in Fig. 2, S1 specifically includes: S11, a standard side length E is preset, which may be set to a maximum value of 16, so that each of the map traversal block fill a maximum of 16X16 grids, and then the process proceeds to S12. In the embodiment, the global grid map corresponding to the global working region is a rectangular map, and the map traversal blocks filling and covering the global grid map are squares. S12, whether the length and the width of the global grid map are both greater than 2 times of the standard side length or not is judged, in a case that the length and the width of the global grid map are both greater than 2 times of the standard side length, the side length of the map traversal blocks is set as the standard side length, otherwise, the process proceeds to S13; S13, whether the length and the width of the global grid map are both greater than the standard side length or not is judged, in a case that the length and the width of the global grid map are both greater than the standard side length, the side length of the map traversal blocks is set to be half of the standard side length, otherwise, the process proceeds to S14; and S14, the side length of the map traversal blocks is set to be one fourth of the standard side length. Compared with the relevant art, a grid expansion processing of the global grid map is realized by the map traversal block formed by every 16X16 map grids, therefore, the map traversal blocks occupy a sufficiently large grid region in the global grid map, and the robot can traverse and mark map path information in the adaptation range. Therefore, the size of the grids is set to be slightly larger, only a general path of the robot needs to be planned, the calculation amount is reduced, and the method is suitable for path planning, boundary walking and recharging path planning.

In the embodiment, a ratio of an effective length of the global grid map to the side length of the map traversal blocks is calculated, and plus-one processing is carried out to obtain a coverage number of the map traversal blocks established in the vertical coordinate axis direction of the global grid map; and a ratio of an effective width of the global grid map to the side length of the map traversal blocks is calculated, and plus-one processing is carried out to obtain a coverage number of the map traversal blocks in the horizontal coordinate axis direction of the global grid map. The necessity of plus-one processing here is that a software system rounds the ratio of the effective length of the global grid map to the side length of the map traversal blocks, and ignores the decimal part, so that plus-one processing is needed to ensure that the map traversal blocks with the coverage number completely record the actually covered global working region, and the redundancy of the spatial region is improved.

On the basis that the side lengths of the map traversal blocks are determined according to the above-mentioned method, the number of the map traversal blocks in each of the global coordinate axis direction of the global grid map is determined through calculation, specifically including that: the number H of the map traversal blocks in the vertical coordinate axis direction (namely in the length direction) of the global grid map = the ratio of the effective length of the global grid map to the side lengths of the map traversal blocks + 1, and the number W of the map traversal blocks in the horizontal coordinate axis direction (namely in the width direction) of the global grid map = the ratio of the effective width of the global grid map to the side lengths of the map traversal blocks + 1. The effective length and effective width in the embodiment include a grid region for the robot to traverse for constructing the map traversal blocks.

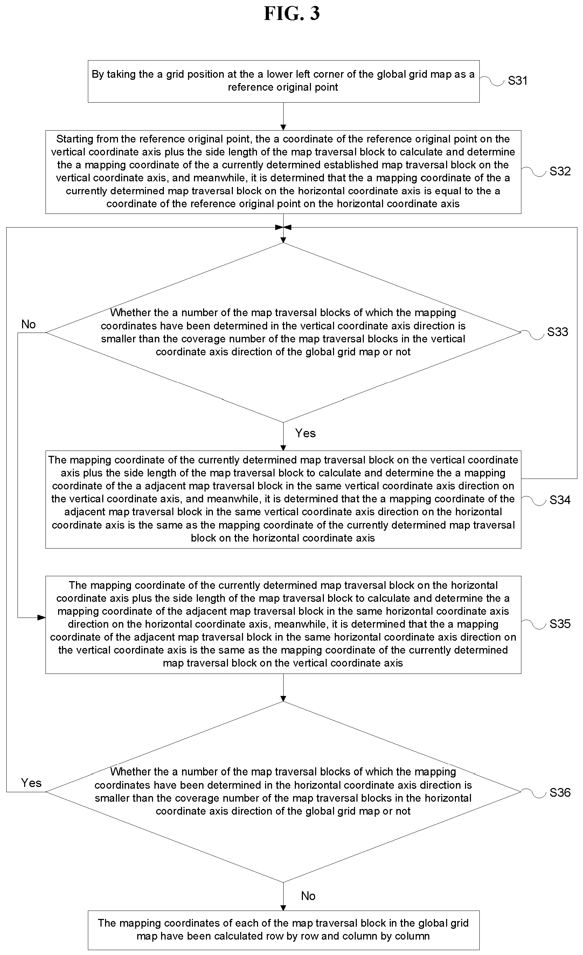

In the embodiment, as shown in the flowchart of the method for calculating mapping coordinates of the map traversal block disclosed by Fig. 3, S3 specifically includes: S31, by taking a grid position at a lower left corner of the global grid map as a reference original point, the process proceeds to S32; and by taking the lower left corner of the global grid map as a reference original point, the mapping coordinates of the map traversal blocks are calculated. Assuming that minx and miny are the coordinates of the reference original point of the global grid map respectively, and are also equivalent to a minimum coordinate value on an X axis of the global grid map and a minimum coordinate value on a Y axis of the global grid map respectively; i is set as the offset of the map traversal block relative to the reference original point in the X-axis direction, and i+1 is equivalent to the number of the map traversal blocks of which the mapping coordinates have been determined in the horizontal coordinate axis direction; j is set as the offset of the map traversal block relative to the reference original point in the Y-axis direction, and j+1 is equivalent to the number of the map traversal blocks of which the mapping coordinates have determined in the vertical coordinate axis direction; e is the side length of the map traversal block; X (i, j) is the mapping coordinate of the map traversal block in the horizontal coordinate axis direction of the global grid map, and Y (i, j) is the mapping coordinate of the map traversal block in the vertical coordinate axis direction of the global grid map. S32, starting from the coordinates of the reference original point(minx, miny), a coordinate of the reference original point on the vertical coordinate axis plus the side length of the map traversal blocks to calculate and determine a mapping coordinate of a currently determined map traversal block on the vertical coordinate axis, namely when j = 0, the minimum mapping coordinate Y (i, j) = j * e + miny = miny on the vertical coordinate axis is obtained, meanwhile, it is determined that a mapping coordinate of a currently determined map traversal block on the horizontal coordinate axis is equal to a coordinate minx of the reference original point on the horizontal coordinate axis, and then the process proceeds to S33. S33, whether the number j of the map traversal blocks of which the mapping coordinates have been determined in the vertical coordinate axis direction is smaller than the coverage number H of the map traversal blocks in the vertical coordinate axis direction of the global grid map or not is judged, in a case that the number j is smaller than the coverage number H, the process proceeds to S34, otherwise, the process proceeds to S35. S34, the mapping coordinate of the currently determined map traversal block on the vertical coordinate axis plus the side length of the map traversal block to calculate and determine a mapping coordinate of an adjacent map traversal block in the same vertical coordinate axis direction on the vertical coordinate axis, namely Y (i, j+1) = (j+1) * e + miny, then the adjacent Y-axis mapping coordinate in the same vertical coordinate axis direction is formed, and j automatically plus one each time the process proceeds to S34; meanwhile, it is determined that a mapping coordinate X (i, j+1) of the adjacent map traversal block in the same vertical coordinate axis direction on the horizontal coordinate axis is the same as the mapping coordinate X (i, j) of the currently determined map traversal block on the horizontal coordinate axis, and then the process returns to the S33, so that mapping coordinates of each of the map traversal block in the same vertical coordinate axis direction are determined row by row under a constraint effect of a coverage number in the same vertical coordinate axis direction. S35, the mapping coordinate of the currently determined map traversal block on the horizontal vertical coordinate axis plus the side length of the map traversal block to calculate and determine a mapping coordinate of the adjacent map traversal block in the same horizontal coordinate axis direction on the horizontal coordinate axis, namely when i = 0, the minimum mapping coordinate X (i, j) = i * e + minx = minx on the horizontal coordinate axis is obtained, and i automatically plus one each time the process proceeds to S35; meanwhile, it is determined that a mapping coordinate Y (i+1, j) of the adjacent map traversal block in the same horizontal coordinate axis direction on the vertical coordinate axis is the same as the mapping coordinate Y (i, j) of the currently determined map traversal block on the vertical coordinate axis, and then the process proceeds to S36, so that mapping coordinates of each of the map traversal block in the same horizontal coordinate axis direction are determined column by column under a constraint effect of a coverage number in the same horizontal coordinate axis direction. S36, whether a number i of the map traversal blocks of which the mapping coordinates have been determined in the horizontal coordinate axis direction is smaller than the coverage number W of the map traversal blocks in the horizontal coordinate axis direction of the global grid map or not is judged, in a case that the number of i is smaller than the coverage number W, the process returns to S33, otherwise, it is determined that the mapping coordinates of each of the map traversal block in the global grid map have been calculated row by row and column by column, so that the map traversal blocks are established in each row and each column of the global grid map, and a block processing of the global grid map is completed. Therefore, the minimum mapping coordinate X (i, j) = i * e + minx of the map traversal block in the X-axis direction and the minimum mapping coordinate Y (i, j) = j * e + miny of the map traversal block in the Y-axis direction can be calculated according to the offset relative to the reference original point in the X-axis direction and the Y-axis direction and the side length of the map traversal block, therefore, the grid coordinate range of the map traversal block in the X-axis direction and the Y-axis direction of the global grid map is determined, namely, the grid coordinate range of the map traversal block in the X-axis direction is greater than or equal to X (i, j), but smaller than or equal to X (i, j)+e-1;the grid coordinate range of the map traversal block in the Y-axis direction is greater than or equal to Y (i, j), but smaller than or equal to Y (i, j)+e-1; and according to the number of the map traversal blocks in each of the global coordinate axis direction of the global grid map and the grid coordinate range where the map traversal blocks are located, the map traversal blocks are distributed to each row and each column of the global grid map. According to the abovementioned technical solution, according to the map boundary constraint effect achieved by the coverage number of the map traversal blocks determined in the previous step, row-by-row and column-by-column accumulated operation is carried out on the side lengths of the determined map traversal blocks, including the current column is traversed first and then the next column is traversed until all columns of map traversal blocks distributed in the horizontal coordinate axis direction are traversed, so that the mapping coordinates of each of the map traversal block are determined, the map traversal blocks are established on the regular region blocks of each row and each column of the global grid map, and the global grid map is divided into the map traversal blocks.

In another embodiment, S3 may further include: S31, by taking the grid position at the lower left corner of the global grid map as a reference original point, the process proceeds to S32; S32, starting from the reference original point, a coordinate of the reference original point on the horizontal coordinate axis plus the side length of the map traversal block to calculate and determine the mapping coordinate of the adjacent map traversal block in the same horizontal coordinate axis direction on the horizontal coordinate axis, meanwhile, it is determined that the mapping coordinate of the currently determined map traversal block on the vertical coordinate axis is equal to the coordinate of the reference original point on the vertical coordinate axis, then the process proceeds to S33, and the reference original point is the position with the minimum coordinate value on each of the global coordinate axis of the global grid map; S33, whether the number of the map traversal blocks of which the mapping coordinates have been determined in the horizontal coordinate axis direction is smaller than the coverage number of the map traversal blocks in the horizontal coordinate axis direction of the global grid map or not is judged, in a case that the number of the map traversal blocks of which the mapping coordinates have been determined in the horizontal coordinate axis direction is smaller than the coverage number of the map traversal blocks in the horizontal coordinate axis direction of the global grid map, the process proceeds to S34, otherwise, the process proceeds to S35; S34, the mapping coordinate of the currently determined map traversal block on the horizontal coordinate axis plus the side length of the map traversal block to calculate and determine the mapping coordinate of the adjacent map traversal block in the same horizontal coordinate axis direction on the horizontal coordinate axis, meanwhile, it is determined that the mapping coordinate of the adjacent map traversal block in the same horizontal coordinate axis direction on the vertical coordinate axis is the same as the mapping coordinate of the currently determined map traversal block on the vertical coordinate axis, then the process enters S33, so that the mapping coordinates of each of the map traversal block in the same horizontal coordinate axis direction are determined column by column under the constraint effect of the coverage number in the same horizontal coordinate axis direction; S35, the mapping coordinate of the currently determined map traversal block on the vertical coordinate axis plus the side length of the map traversal block to calculate and determine the mapping coordinate of the adjacent map traversal block in the same vertical coordinate axis direction on the vertical coordinate axis, meanwhile, it is determined that the mapping coordinate of the adjacent map traversal block in the same vertical coordinate axis direction on the horizontal coordinate axis is the same as the mapping coordinate of the currently determined map traversal block on the horizontal coordinate axis, then the process proceeds to S36, and the mapping coordinates of each of the map traversal block in the same vertical coordinate axis direction are determined row by row under the constraint effect of the coverage number in the same vertical coordinate axis direction; S36, whether the number of the map traversal blocks of which the mapping coordinates have been determined in the vertical coordinate axis direction is smaller than the coverage number of the map traversal blocks in the vertical coordinate axis direction of the global grid map or not is judged, in a case that the number of the map traversal blocks of which the mapping coordinates have been determined in the vertical coordinate axis direction is smaller than the coverage number of the map traversal blocks in the vertical coordinate axis direction of the global grid map, the process returns to S33, otherwise, it is determined that the mapping coordinates of each of the map traversal block in the global grid map have been calculated row by row and column by column, so that the map traversal blocks are established in each row and each column of the global grid map, and block processing of the global grid map is completed. Compared with the previous embodiment, in the embodiment, the current row is traversed first and then the next row is traversed until all rows of map traversal blocks distributed in the vertical coordinate axis direction are traversed, and the involved coordinate value accumulation step is similar to that of the previous embodiment, so that no detailed elaboration will be made herein.

In another embodiment, a coordinate of a grid point traversed by a robot on the vertical coordinate axis is greater than or equal to the mapping coordinate of the map traversal block on the vertical coordinate axis; the coordinate of the grid point traversed by the robot on the vertical coordinate axis is smaller than or equal to a result obtained by subtracting one from the sum of the mapping coordinate of the map traversal block on the vertical coordinate axis and the side length of the map traversal block; a coordinate of the grid point traversed by the robot on the horizontal coordinate axis is greater than or equal to the mapping coordinate of the map traversal block on the horizontal coordinate axis; the coordinate of the grid point traversed by the robot on the horizontal coordinate axis is smaller than or equal to a result obtained by subtracting one from the sum of the mapping coordinate of the map traversal block on the horizontal coordinate axis and the side length of the map traversal block, and it is determined that the grid point traversed by the robot is located in the map traversal block. Therefore, the method for judging whether a grid position coordinate (a, b) of the global grid map belongs to a traversal map block or not includes: whether a is greater than or equal to X (i, j) and smaller than or equal to X (i, j) +e-1 is judged; meanwhile, whether b is greater than or equal to Y (i, j) and smaller than or equal to Y (i, j)+e-1 or not is judged; and when the grid position coordinate (a, b) meets the two judgment conditions at the same time, it is determined that the grid position coordinate (a, b) is located in the map traversal block. When a cleaning robot traverses any grid in the map traversal block, a corresponding map traversal block is marked as a traversed map traversal block, in the embodiment, the left boundary of the map traversal block is defined to be contained in its inner region, the right boundary of the map traversal block is defined to be contained in the inner region of the adjacent map traversal block in the horizontal coordinate axis direction, so that the region between the left boundary and the right boundary of the map traversal block and the left boundary of the map traversal block belong to the same map traversal block, grids contained inside belong to the grids forming the map traversal block, meanwhile, the lower boundary of the map traversal block is defined to be contained in its inner region, the upper boundary of the map traversal block is defined to be contained in the inner region of the adjacent map traversal block in the vertical coordinate axis direction, the region between the lower boundary and the upper boundary of the map traversal block and the lower boundary of the map traversal block belong to the same map traversal block, and the grids contained inside belong to the grids forming the map traversal block.

When the cleaning robot traverses any grid in the map traversal block according to the preset cleaning mode, for example, when the cleaning robot traverses the grid position coordinate (a, b), the corresponding map traversal block is marked as the traversed map traversal block; a cleaning path traversed by the cleaning robot in a global working region is composed of the traversed map traversal blocks, and compared with a mode of grid marking one by one, the map traversal blocks record a larger path region range, the number of marking blocks used for marking the same path is reduced, the requirements on the computing power of the cleaning robot and the requirements on the storage space are reduced, and the map constructing time is reduced.

A chip, having a built-in control program for dividing a global grid map constructed by a mobile robot in real time by executing the method for establishing the map traversal blocks. It is to be understood that the embodiments described herein may be implemented by hardware, software, firmware, middleware, microcode, or any combination thereof. For a hardware implementation mode, a processing unit may be implemented within one or more of an Application Specific Integrated Circuit (ASIC), a Digital Signal Processor (DSP), a Digital Signal Processing Device (DSPD), a Programmable Logic Device (PLD), a Field Programmable Gate Array (FPGA), a processor, a controller, a micro-controller, a microprocessor, other electronic units designed to perform the functions described herein, or a combination thereof. When the embodiments are implemented in software, firmware, middleware or microcode, program code or code segments, they can be stored in a machine-readable medium, such as a storage component.

A mobile robot, having the built-in chip.

The logic and/or steps represented in the flowcharts or otherwise described herein, such as an ordered listing of executable instructions that can be considered to implement logical functions, can be embodied in any computer-readable medium for use by or in connection with an instruction execution system, apparatus, or device, (such as a computer-based system, processor-containing system, or other system that can fetch the instructions from the instruction execution system, apparatus, or device and execute the instructions). For the purposes of this description, the "computer-readable medium" can be any apparatus that can contain, store, communicate, propagate, or transport the program for use by or in connection with the instruction execution system, apparatus, or device. More specific examples (a non-exhaustive list) of the computer-readable medium include the following: an electrical connection (electronic device) having one or more wires, a portable computer diskette (magnetic device), a Random Access Memory (RAM), a Read-Only Memory (ROM), an Erasable Programmable Read-Only Memory (EPROM or flash memory), an optical fiber device, and a portable Compact Disc Read-Only Memory (CDROM). In addition, the computer-readable medium can even be paper or another suitable medium upon which the program can be printed, as the program can be electronically captured, via for instance optical scanning of the paper or other medium, then compiling, interpreting or otherwise processing in a suitable manner if necessary, and then is stored in a computer memory.

The above embodiments are only for illustrating the technical idea and features of the disclosure, and the purpose is to enable those skilled in the art to understand the content of the disclosure and implement the disclosure accordingly, and not to limit the protection scope of the disclosure accordingly.

## Claims

1. A method for establishing map traversal blocks of a global grid map, **characterized in that** the method comprises:
S1, setting side lengths of the map traversal blocks according to a size of the global grid map;
S2, calculating a coverage number of map traversal blocks in each of a global coordinate axis direction of the global grid map in combination with a ratio relationship between the size of the global grid map and the side lengths of the map traversal blocks determined in S1;
S3, according to a constraint effect of the coverage number of the map traversal blocks determined in S2, carrying out a row-by-row and column-by-column accumulated operation on the side lengths of the map traversal blocks determined in S1 to calculate mapping coordinates of each map traversal block, so as to enable the map traversal block fills every row and column of the global grid map;
wherein each of the map traversal block is formed by combining corresponding grids according to its mapping coordinates and side length;
wherein S2 specifically comprises:
where a quotient of an effective length of the global grid map divided by the side length of the map traversal blocks is a non-integer, ignoring a fraction, and determining a ratio of the effective length of the global grid map to the side length of the map traversal blocks as an integer part of the quotient, and +1 is performed on the ratio to obtain a coverage number of the map traversal blocks in the vertical coordinate axis direction of the global grid map;
where a quotient of the effective width of the global grid map divided by the side length of the map traversal blocks is a non-integer, ignoring the fractional part, and determining the ratio of the effective width of said global grid map to the side length of the map traversal blocks as the integer part of said quotient, and +1 is performed on said ratio value to obtain a coverage number of the map traversal blocks in the horizontal coordinate axis direction of the global grid map.

2. The method for establishing the map traversal blocks according to claim 1, wherein map traversal blocks of each row of the global grid map are arranged in a horizontal coordinate axis direction and projections of the map traversal blocks in a vertical coordinate axis direction are overlapped, and map traversal blocks of each column of the global grid map are arranged in the vertical coordinate axis direction and projections of the map traversal blocks in the horizontal coordinate axis direction are overlapped;
the global coordinate axis directions comprise the vertical coordinate axis direction and the horizontal coordinate axis direction.

3. The method for establishing the map traversal blocks according to claim 2, wherein S1 specifically comprises:
S11, presetting a standard side length, and then entering S12;
S12, judging whether a length and a width of the global grid map are both greater than 2 times of the standard side length or not, in a case that the length and the width of the global grid map are both greater than 2 times of the standard side length, setting the side length of the map traversal blocks as the standard side length, otherwise, entering S13;
S13, judging whether the length and the width of the global grid map are both greater than the standard side length or not, in a case that the length and the width of the global grid map are both greater than the standard side length, setting the side length of the map traversal blocks to be half of the standard side length, otherwise, entering S14;
S14, setting the side length of the map traversal blocks to be one fourth of the standard side length;
wherein the global grid map is a rectangular map region, and the map traversal blocks are squares.

4. The method for establishing the map traversal blocks according to claim 1, wherein S3 specifically comprises:
S31, taking a grid position at a lower left corner of the global grid map as a reference original point, and then entering S32;
S32, starting from the reference original point, adding a coordinate of the reference original point on the vertical coordinate axis with the side length of the map traversal block to calculate and determine a mapping coordinate of a currently determined map traversal block on the vertical coordinate axis, meanwhile, determining that a mapping coordinate of a currently determined map traversal block on the horizontal coordinate axis is equal to a coordinate of the reference original point on the horizontal coordinate axis, and then entering S33, wherein the reference original point is a position with a minimum coordinate value on each of the global coordinate axis of the global grid map;
S33, judging whether a number of the map traversal blocks of which the mapping coordinates have been determined in the vertical coordinate axis direction is smaller than the coverage number of the map traversal blocks in the vertical coordinate axis direction of the global grid map or not, in a case that the mapping coordinates have been determined in the vertical coordinate axis direction is smaller than the coverage number of the map traversal blocks in the vertical coordinate axis direction of the global grid map, entering S34, otherwise, entering S35;
S34, adding the mapping coordinate of the currently determined map traversal block on the vertical coordinate axis with the side length of the map traversal block to calculate and determine a mapping coordinate of an adjacent map traversal block in the same vertical coordinate axis direction on the vertical coordinate axis, meanwhile, determining that a mapping coordinate of the adjacent map traversal block in the same vertical coordinate axis direction on the horizontal coordinate axis is the same as the mapping coordinate of the currently determined map traversal block on the horizontal coordinate axis, and then returning to S33, so that mapping coordinates of each of the map traversal block in the same vertical coordinate axis direction are determined row by row under a constraint effect of a coverage number in the same vertical coordinate axis direction;
S35, adding the mapping coordinate of the currently determined map traversal block on the horizontal coordinate axis with the side length of the map traversal block to calculate and determine a mapping coordinate of the adjacent map traversal block in the same horizontal coordinate axis direction on the horizontal coordinate axis, meanwhile, determining that a mapping coordinate of the adjacent map traversal block in the same horizontal coordinate axis direction on the vertical coordinate axis is the same as the mapping coordinate of the currently determined map traversal block on the vertical coordinate axis, and then entering S36, so that mapping coordinates of each of the map traversal block in the same horizontal coordinate axis direction are determined column by column under a constraint effect of a coverage number in the same horizontal coordinate axis direction;
S36, judging whether a number of the map traversal blocks of which the mapping coordinates have been determined in the horizontal coordinate axis direction is smaller than the coverage number of the map traversal blocks in the horizontal coordinate axis direction of the global grid map or not, in a case that the number of the map traversal blocks of which the mapping coordinates have been determined in the horizontal coordinate axis direction is smaller than the coverage number of the map traversal blocks in the horizontal coordinate axis direction of the global grid map, returning to S33, otherwise, determining that the mapping coordinates of each of the map traversal block in the global grid map have been calculated row by row and column by column, so that the map traversal blocks are established in each row and each column of the global grid map, and a block processing of the global grid map is completed.

5. The method for establishing the map traversal blocks according to claim 1, wherein S3 specifically comprises:
S31, taking the grid position at the lower left corner of the global grid map as a reference original point, and then entering S32;
S32, starting from the reference original point, adding a coordinate of the reference original point on the horizontal coordinate axis with the side length of the map traversal block to calculate and determine the mapping coordinate of the adjacent map traversal block in the same horizontal coordinate axis direction on the horizontal coordinate axis, meanwhile, determining that the mapping coordinate of the currently determined map traversal block on the vertical coordinate axis is equal to the coordinate of the reference original point on the vertical coordinate axis, and then entering S33, wherein the reference original point is the position with the minimum coordinate value on each of the global coordinate axis of the global grid map;
S33, judging whether the number of the map traversal blocks of which the mapping coordinates have been determined in the horizontal coordinate axis direction is smaller than the coverage number of the map traversal blocks in the horizontal coordinate axis direction of the global grid map or not, in a case that the number of the map traversal blocks of which the mapping coordinates have been determined in the horizontal coordinate axis direction is smaller than the coverage number of the map traversal blocks in the horizontal coordinate axis direction of the global grid map, entering S34, otherwise, entering S35;
S34, adding the mapping coordinate of the currently determined map traversal block on the horizontal coordinate axis with the side length of the map traversal block to calculate and determine the mapping coordinate of the adjacent map traversal block in the same horizontal coordinate axis direction on the horizontal coordinate axis, meanwhile, determining that the mapping coordinate of the adjacent map traversal block in the same horizontal coordinate axis direction on the vertical coordinate axis is the same as the mapping coordinate of the currently determined map traversal block on the vertical coordinate axis, and then entering S33, so that the mapping coordinates of each of the map traversal block in the same horizontal coordinate axis direction are determined column by column under the constraint effect of the coverage number in the same horizontal coordinate axis direction;
S35, adding the mapping coordinate of the currently determined map traversal block on the vertical coordinate axis with the side length of the map traversal block to calculate and determine the mapping coordinate of the adjacent map traversal block in the same vertical coordinate axis direction on the vertical coordinate axis, meanwhile, determining that the mapping coordinate of the adjacent map traversal block in the same vertical coordinate axis direction on the horizontal coordinate axis is the same as the mapping coordinate of the currently determined map traversal block on the horizontal coordinate axis, and then entering S36, so that the mapping coordinates of each of the map traversal block in the same vertical coordinate axis direction are determined row by row under the constraint effect of the coverage number in the same vertical coordinate axis direction;
S36, judging whether the number of the map traversal blocks of which the mapping coordinates have been determined in the vertical coordinate axis direction is smaller than the coverage number of the map traversal blocks in the vertical coordinate axis direction of the global grid map or not, in a case that the number of the map traversal blocks of which the mapping coordinates have been determined in the vertical coordinate axis direction is smaller than the coverage number of the map traversal blocks in the vertical coordinate axis direction of the global grid map, returning to S33, otherwise, determining that the mapping coordinates of each of the map traversal block in the global grid map have been calculated row by row and column by column, so that the map traversal blocks are established in each row and each column of the global grid map, and the block processing of the global grid map is completed.

6. The method for establishing the map traversal blocks according to claim 4 or 5, wherein a coordinate of a grid point traversed by a robot on the vertical coordinate axis is greater than or equal to the mapping coordinate of the map traversal block on the vertical coordinate axis; the coordinate of the grid point traversed by the robot on the vertical coordinate axis is smaller than or equal to a result obtained by subtracting one from the sum of the mapping coordinate of the map traversal block on the vertical coordinate axis and the side length of the map traversal block; a coordinate of the grid point traversed by the robot on the horizontal coordinate axis is greater than or equal to the mapping coordinate of the map traversal block on the horizontal coordinate axis; the coordinate of the grid point traversed by the robot on the horizontal coordinate axis is smaller than or equal to a result obtained by subtracting one from the sum of the mapping coordinate of the map traversal block on the horizontal coordinate axis and the side length of the map traversal block, and it is determined that the grid point traversed by the robot is located in the map traversal block.

7. The method for establishing the map traversal blocks according to claim 6, wherein when a cleaning robot traverses any grid in the map traversal block, a corresponding map traversal block is marked as a traversed map traversal block.

8. A chip, having a built-in control program, wherein the control program is configured to divide a global grid map constructed by a mobile robot in real time by executing the method for establishing the map traversal blocks according to any one of claims 1-7.

9. A mobile robot, having the built-in chip according to claim 8.

## Patentansprüche

1. Verfahren zum Erstellen von Kartentraversalblöcken einer globalen Gitterkarte, **dadurch gekennzeichnet, dass** das Verfahren umfasst:
S1, Einstellung der Seitenlängen der Kartentraversalblöcke entsprechend der Größe der globalen Gitterkarte;
S2, Berechnen einer Bedeckungszahl von Kartentraversalblöcken in jeder globalen Koordinatenachsenrichtung der globalen Gitterkarte in Kombination mit einer Verhältnisbeziehung zwischen der Größe der globalen Gitterkarte und den in S1 bestimmten Seitenlängen der Kartentraversalblöcke;
S3, Ausführen einer zeilenweisen und spaltenweisen Akkumulationsoperation an den in S1 bestimmten Seitenlängen der Kartentraversalblöcke, um die Abbildungskoordinaten jedes Kartentraversalblocks zu berechnen, um zu ermöglichen, dass der Kartentraversalblock jede Zeile und Spalte der globalen Gitterkarte ausfüllt, entsprechend einer Beschränkungswirkung der in S2 bestimmten Überdeckungszahl der Kartentraversalblöcke;
wobei jeder der Kartentraversalblöcke durch Kombinieren entsprechender Raster entsprechend seiner Abbildungskoordinaten und Seitenlänge gebildet wird; .
wobei S2 insbesondere umfasst:
wenn ein Quotient aus einer effektiven Länge der globalen Gitterkarte geteilt durch die Seitenlänge der Kartentraversalblöcke eine Nicht-Ganzzahl ist, ignorieren eines Bruches bzw. Bruchteils, und bestimmen eines Verhältnisses der effektiven Länge der globalen Gitterkarte zu der Seitenlänge der Kartentraversalblöcke als ein ganzzahliger Teil des Quotienten, und +1 auf dem Bruch durchgeführt wird, um eine Abdeckungszahl der Kartentraversalblöcke in der vertikalen Koordinatenachsenrichtung der globalen Gitterkarte zu erhalten;
wenn ein Quotient aus der effektiven Breite der globalen Gitterkarte geteilt durch die Seitenlänge der Kartentraversalblöcke eine Nicht-Ganzzahl ist, ignorieren eines Bruchteils, und bestimmen des Verhältnisses der effektiven Breite der globalen Gitterkarte zur Seitenlänge der Kartentraversalblöcke als der ganzzahlige Teil des Quotienten, und +1 mit dem Verhältniswert durchgeführt wird, um eine Abdeckungszahl der Kartentraversalblöcke in der horizontalen Koordinatenachsenrichtung der globalen Gitterkarte zu erhalten.

2. Verfahren zum Erstellen von Kartentraversalblöcken nach Anspruch 1, wobei Kartentraversalblöcke jeder Zeile der globalen Gitterkarte in einer horizontalen Koordinatenachsenrichtung angeordnet sind und Projektionen der Kartentraversalblöcke in einer vertikalen Koordinatenachsenrichtung überlappt werden, und Kartentraversalblöcke jeder Spalte der globalen Gitterkarte in der vertikalen Koordinatenachsenrichtung angeordnet sind und Projektionen der Kartentraversalblöcke in der horizontalen Koordinatenachsenrichtung überlappt werden;
die Richtungen der globalen Koordinatenachsen umfassen die Richtung der vertikalen Koordinatenachse und die Richtung der horizontalen Koordinatenachse.

3. Verfahren zum Erstellen von Kartentraversalblöcken nach Anspruch 2, wobei S1 insbesondere umfasst:
S11, die Voreinstellung einer Standardseitenlänge und die Eingabe von S12;
S12, Beurteilen, ob eine Länge und eine Breite der globalen Rasterkarte beide größer als das Zweifache der Standardseitenlänge sind oder nicht, in einem Fall, dass die Länge und die Breite der globalen Rasterkarte beide größer als das Zweifache der Standardseitenlänge sind, Einstellen der Seitenlänge der Kartentraversalblöcke als die Standardseitenlänge, andernfalls, Aufrufen von S13;
S13, Beurteilen, ob die Länge und die Breite der globalen Gitterkarte beide größer als die Standardseitenlänge sind oder nicht, in dem Fall, dass die Länge und die Breite der globalen Gitterkarte beide größer als die Standardseitenlänge sind, Einstellen der Seitenlänge der Kartentraversalblöcke auf die Hälfte der Standardseitenlänge, andernfalls Eintritt in S14;
S14, wobei die Seitenlänge der Kartentraversalblöcke auf ein Viertel der Standardseitenlänge festgelegt wird;
wobei die globale Gitterkarte eine rechteckige Kartenregion ist und die Blöcke zum Durchlaufen der Karte Quadrate sind.

4. Verfahren zum Erstellen von Kartentraversalblöcken nach Anspruch 1, wobei S3 insbesondere umfasst:
S31, wobei eine Gitterposition in der linken unteren Ecke der globalen Gitterkarte als ursprünglicher Referenzpunkt genommen und dann S32 eingegeben wird;
S32, ausgehend von dem ursprünglichen Referenzpunkt, Addieren einer Koordinate des ursprünglichen Referenzpunktes auf der vertikalen Koordinatenachse mit der Seitenlänge des Kartentraversalblocks, um eine Abbildungskoordinate eines aktuell bestimmten Kartentraversalblocks auf der vertikalen Koordinatenachse zu berechnen und zu bestimmen, währenddessen Bestimmen, dass eine Abbildungskoordinate eines aktuell bestimmten Kartentraversalblocks auf der horizontalen Koordinatenachse gleich einer Koordinate des ursprünglichen Referenzpunktes auf der horizontalen Koordinatenachse ist, und dann Eingeben von S33, wobei der ursprüngliche Referenzpunkt eine Position mit einem minimalen Koordinatenwert auf jeder der globalen Koordinatenachsen der globalen Gitterkarte ist;
S33, Beurteilen, ob eine Anzahl der Kartentraversalblöcke, von denen die Abbildungskoordinaten in der vertikalen Koordinatenachsenrichtung bestimmt worden sind, kleiner ist als die Abdeckungsanzahl der Kartentraversalblöcke in der vertikalen Koordinatenachsenrichtung der globalen Gitterkarte oder nicht, in einem Fall, dass die Abbildungskoordinaten in der vertikalen Koordinatenachsenrichtung bestimmt worden sind, kleiner ist als die Abdeckungsanzahl der Kartentraversalblöcke in der vertikalen Koordinatenachsenrichtung der globalen Gitterkarte, Eingeben von S34, andernfalls, Eingeben von S35;
S34, Addieren der Abbildungskoordinate des aktuell bestimmten Kartentraversalblocks auf der vertikalen Koordinatenachse mit der Seitenlänge des Kartentraversalblocks, um eine Abbildungskoordinate eines benachbarten Kartentraversalblocks in der gleichen vertikalen Koordinatenachsenrichtung auf der vertikalen Koordinatenachse zu berechnen und zu bestimmen, wobei Bestimmen, dass eine Abbildungskoordinate des benachbarten Kartentraversalblocks in derselben vertikalen Koordinatenachsenrichtung auf der horizontalen Koordinatenachse dieselbe ist wie die Abbildungskoordinate des aktuell bestimmten Kartentraversalblocks auf der horizontalen Koordinatenachse, und dann Zurückkehren zu S33, so dass Abbildungskoordinaten jedes der Kartentraversalblöcke in derselben vertikalen Koordinatenachsenrichtung Zeile für Zeile unter einem Beschränkungseffekt einer Überdeckungszahl in derselben vertikalen Koordinatenachsenrichtung bestimmt werden;
S35, Addieren der Abbildungskoordinate des aktuell bestimmten Kartentraversalblocks auf der horizontalen Koordinatenachse mit der Seitenlänge des Kartentraversalblocks, um eine Abbildungskoordinate des benachbarten Kartentraversalblocks in der gleichen horizontalen Koordinatenachsenrichtung auf der horizontalen Koordinatenachse zu berechnen und zu bestimmen, währenddessen, Bestimmen, dass eine Abbildungskoordinate des benachbarten Kartentraversalblocks in der gleichen horizontalen Koordinatenachsenrichtung auf der vertikalen Koordinatenachse die gleiche ist wie die Abbildungskoordinate des aktuell bestimmten Kartentraversalblocks auf der vertikalen Koordinatenachse, und dann Eingeben von S36, so dass Abbildungskoordinaten von jedem der Kartentraversalblöcke in der gleichen horizontalen Koordinatenachsenrichtung spaltenweise unter einem Beschränkungseffekt einer Abdeckungsnummer in der gleichen horizontalen Koordinatenachsenrichtung bestimmt werden;
S36, Beurteilen, ob eine Anzahl der Kartentraversalblöcke, deren Abbildungskoordinaten in der Richtung der horizontalen Koordinatenachse bestimmt worden sind, kleiner ist als die Abdeckungsanzahl der Kartentraversalblöcke in der Richtung der horizontalen Koordinatenachse der globalen Gitterkarte oder nicht, in einem Fall, dass die Anzahl der Kartentraversalblöcke, deren Abbildungskoordinaten in der Richtung der horizontalen Koordinatenachse bestimmt worden sind, kleiner ist als die Abdeckungsanzahl der Kartentraversalblöcke in der Richtung der horizontalen Koordinatenachse der globalen Gitterkarte, Rückkehr zu S33, andernfalls Bestimmung, dass die Abbildungskoordinaten jedes der Kartentraversalblöcke in der globalen Gitterkarte zeilenweise und spaltenweise berechnet worden sind, so dass die Kartentraversalblöcke in jeder Zeile und jeder Spalte der globalen Gitterkarte festgelegt sind, und eine Blockverarbeitung der globalen Gitterkarte abgeschlossen ist.

5. Verfahren zum Erstellen von Kartentraversalblöcken nach Anspruch 1, wobei S3 insbesondere Folgendes umfasst
S31, wobei die Gitterposition in der linken unteren Ecke der globalen Gitterkarte als ursprünglicher Referenzpunkt verwendet wird, und dann S32;
S32, ausgehend von dem ursprünglichen Referenzpunkt, Addieren einer Koordinate des ursprünglichen Referenzpunktes auf der horizontalen Koordinatenachse mit der Seitenlänge des Kartentraversalblocks, um die Abbildungskoordinate des benachbarten Kartentraversalblocks in der gleichen horizontalen Koordinatenachsenrichtung auf der horizontalen Koordinatenachse zu berechnen und zu bestimmen, währenddessen, Bestimmen, dass die Abbildungskoordinate des aktuell bestimmten Kartentraversalblocks auf der vertikalen Koordinatenachse gleich der Koordinate des ursprünglichen Referenzpunktes auf der vertikalen Koordinatenachse ist, und dann Eintreten in S33, wobei der ursprüngliche Referenzpunkt die Position mit dem minimalen Koordinatenwert auf jeder der globalen Koordinatenachsen der globalen Gitterkarte ist;
S33, Beurteilen, ob die Anzahl der Kartentraversalblöcke, von denen die Abbildungskoordinaten in der horizontalen Koordinatenachsenrichtung bestimmt worden sind, kleiner ist als die Abdeckungsanzahl der Kartentraversalblöcke in der horizontalen Koordinatenachsenrichtung der globalen Gitterkarte oder nicht, in einem Fall, dass die Anzahl der Kartentraversalblöcke, von denen die Abbildungskoordinaten in der horizontalen Koordinatenachsenrichtung bestimmt worden sind, kleiner ist als die Abdeckungsanzahl der Kartentraversalblöcke in der horizontalen Koordinatenachsenrichtung der globalen Gitterkarte, Eingeben von S34, andernfalls Eingeben von S35;
S34, Addieren der Abbildungskoordinate des aktuell bestimmten Kartentraversalblocks auf der horizontalen Koordinatenachse mit der Seitenlänge des Kartentraversalblocks, um die Abbildungskoordinate des benachbarten Kartentraversalblocks in der gleichen horizontalen Koordinatenachsenrichtung auf der horizontalen Koordinatenachse zu berechnen und zu bestimmen, währenddessen, Bestimmen, dass die Abbildungskoordinate des benachbarten Kartentraversalblocks in der gleichen horizontalen Koordinatenachsenrichtung auf der vertikalen Koordinatenachse die gleiche ist wie die Abbildungskoordinate des aktuell bestimmten Kartentraversalblocks auf der vertikalen Koordinatenachse, und dann Eingeben von S33, so dass die Abbildungskoordinaten jedes der Kartentraversalblöcke in der gleichen horizontalen Koordinatenachsenrichtung spaltenweise unter dem Zwangseffekt der Abdeckungsnummer in der gleichen horizontalen Koordinatenachsenrichtung bestimmt werden;
S35, Addieren der Abbildungskoordinate des aktuell bestimmten Kartentraversalblocks auf der vertikalen Koordinatenachse mit der Seitenlänge des Kartentraversalblocks, um die Abbildungskoordinate des benachbarten Kartentraversalblocks in der gleichen vertikalen Koordinatenachsenrichtung auf der vertikalen Koordinatenachse zu berechnen und zu bestimmen, währenddessen, Bestimmen, dass die Abbildungskoordinate des benachbarten Kartentraversalblocks in der gleichen vertikalen Koordinatenachsenrichtung auf der horizontalen Koordinatenachse die gleiche ist wie die Abbildungskoordinate des aktuell bestimmten Kartentraversalblocks auf der horizontalen Koordinatenachse, und dann Eingeben von S36, so dass die Abbildungskoordinaten jedes der Kartenverschiebungsblöcke in der gleichen vertikalen Koordinatenachsenrichtung zeilenweise unter dem Zwangseffekt der Abdeckungsnummer in der gleichen vertikalen Koordinatenachsenrichtung bestimmt werden;
S36, Beurteilen, ob die Anzahl der Kartentraversalblöcke, deren Abbildungskoordinaten in der vertikalen Koordinatenachsenrichtung bestimmt worden sind, kleiner ist als die Abdeckungsanzahl der Kartentraversalblöcke in der vertikalen Koordinatenachsenrichtung der globalen Gitterkarte oder nicht, in einem Fall, dass die Anzahl der Kartentraversalblöcke, deren Abbildungskoordinaten in der vertikalen Koordinatenachsenrichtung bestimmt worden sind, kleiner ist als die Abdeckungsanzahl der Kartentraversalblöcke in der vertikalen Koordinatenachsenrichtung der globalen Gitterkarte, Zurückkehren zu S33, andernfalls Bestimmen, dass die Abbildungskoordinaten jedes der Kartentraversalblöcke in der globalen Gitterkarte zeilenweise und spaltenweise berechnet worden sind, so dass die Kartentraversalblöcke in jeder Zeile und jeder Spalte der globalen Gitterkarte festgelegt sind, und die Blockverarbeitung der globalen Gitterkarte abgeschlossen ist.

6. Verfahren zum Erstellen von Kartentraversalblöcken nach Anspruch 4 oder 5, wobei eine Koordinate eines von einem Roboter auf der vertikalen Koordinatenachse überfahrenen Rasterpunkts größer oder gleich der Abbildungskoordinate des Kartentraversalblocks auf der vertikalen Koordinatenachse ist; die Koordinate des von dem Roboter auf der vertikalen Koordinatenachse überfahrenen Rasterpunkts kleiner oder gleich einem Ergebnis ist, das man erhält, indem man von der Summe aus der Abbildungskoordinate des Kartentraversalblocks auf der vertikalen Koordinatenachse und der Seitenlänge des Kartentraversalblocks eins subtrahiert; eine Koordinate des vom Roboter durchfahrenen Gitterpunkts auf der horizontalen Koordinatenachse größer oder gleich der Abbildungskoordinate des Kartentraversalblocks auf der horizontalen Koordinatenachse ist; die Koordinate des vom Roboter durchfahrenen Gitterpunktes auf der horizontalen Koordinatenachse kleiner oder gleich einem Ergebnis ist, das durch Subtraktion von eins von der Summe der Abbildungskoordinate des Kartentraversalblocks auf der horizontalen Koordinatenachse und der Seitenlänge des Kartentraversalblocks erhalten wird, und festgestellt wird, dass sich der vom Roboter durchfahrene Gitterpunkt in dem Kartentravseralblock befindet.

7. Verfahren zum Erstellen von Kartentraversalblöcken nach Anspruch 6, bei dem, wenn ein Reinigungsroboter ein beliebiges Gitter im Kartentraversalblock überquert, ein entsprechender Kartentraversalblock als überquerter Kartentraversalblock markiert wird.

8. Chip mit einem eingebauten Steuerprogramm, wobei das Steuerprogramm so konfiguriert ist, dass es eine von einem mobilen Roboter erstellte globale Gitterkarte in Echtzeit unterteilt, indem es das Verfahren zum Erstellen der Kartentraversalblöcke gemäß einem der Ansprüche 1-7 ausführt.

9. Mobiler Roboter mit dem eingebauten Chip nach Anspruch 8.

## Revendications

1. Méthode pour établir des blocs de traversée de carte d'une carte de grille globale, **caractérisée par le fait que** la méthode comprend :
S1, réglage des longueurs latérales des blocs de traversée de la carte en fonction de la taille de la carte de la grille globale ;
S2 : calcul d'un nombre de blocs de déplacement dans chacune des directions de l'axe des coordonnées globales de la carte quadrillée globale, en combinaison avec un rapport entre la taille de la carte quadrillée globale et les longueurs des blocs de déplacement déterminés en S1 ;
S3, en fonction d'un effet de contrainte lié au nombre de blocs de déplacement déterminés en S2, réalisation d'une opération d'accumulation ligne par ligne et colonne par colonne sur les longueurs latérales des blocs de déplacement déterminés en S1 pour calculer les coordonnées de mappage de chaque bloc de déplacement, de manière à permettre au bloc de déplacement de remplir chaque ligne et chaque colonne de la carte quadrillée mondiale ;
dans lequel chaque bloc de traversée de carte est formé par la combinaison de grilles correspondantes en fonction de ses coordonnées de cartographie et de sa longueur de côté;
dans lequel S2 comprend spécifiquement :
où le quotient de la longueur effective de la carte quadrillée globale divisée par la longueur latérale des blocs de déplacement de la carte est un nombre non entier, ignorant une fraction, et déterminant un rapport entre la longueur effective de la carte quadrillée globale et la longueur latérale des blocs de déplacement de la carte en tant que partie entière du quotient, et +1 est effectué sur le rapport pour obtenir un nombre de couverture des blocs de déplacement de la carte dans la direction de l'axe de coordonnées verticales de la carte quadrillée globale ;
où le quotient de la largeur effective de la carte quadrillée globale divisée par la longueur des blocs de déplacement de la carte est un nombre non entier, en ignorant la partie fractionnaire, et en déterminant le rapport entre la largeur effective de ladite carte quadrillée globale et la longueur des blocs de déplacement de la carte comme la partie entière dudit quotient, et +1 est effectué sur ladite valeur de rapport pour obtenir un nombre de couverture des blocs de déplacement de la carte dans la direction de l'axe des coordonnées horizontales de la carte quadrillée globale.

2. Méthode pour établir des blocs de traversée de carte selon la revendication 1, dans laquelle les blocs de traversée de carte de chaque rangée de la carte quadrillée mondiale sont disposés dans une direction d'axe de coordonnées horizontales et les projections des blocs de traversée de carte dans une direction d'axe de coordonnées verticales se chevauchent, et les blocs de traversée de carte de chaque colonne de la carte quadrillée mondiale sont disposés dans la direction d'axe de coordonnées verticales et les projections des blocs de traversée de carte dans la direction d'axe de coordonnées horizontales se chevauchent;
les directions de l'axe des coordonnées globales comprennent la direction de l'axe des coordonnées verticales et la direction de l'axe des coordonnées horizontales.

3. Méthode pour établir des blocs de traversée de carte selon la revendication 2, dans laquelle S1 comprend spécifiquement :
S11, en préréglant une longueur latérale standard, puis en entrant dans S12 ;
S12, déterminer si la longueur et la largeur de la carte à grille globale sont toutes deux supérieures à deux fois la longueur latérale standard ou non, dans le cas où la longueur et la largeur de la carte à grille globale sont toutes deux supérieures à deux fois la longueur latérale standard, définir la longueur latérale des blocs de traversée de la carte comme étant la longueur latérale standard, sinon, entrer en S13 ;
S13, déterminer si la longueur et la largeur de la carte à quadrillage global sont toutes deux supérieures à la longueur latérale standard ou non, dans le cas où la longueur et la largeur de la carte à quadrillage global sont toutes deux supérieures à la longueur latérale standard, régler la longueur latérale des blocs de déplacement de la carte à la moitié de la longueur latérale standard, sinon entrer en S14 ;
S14 : réglage de la longueur latérale des blocs de traversée de la carte à un quart de la longueur latérale standard ;
La carte quadrillée globale est une région rectangulaire et les blocs de déplacement de la carte sont des carrés.

4. Méthode pour établir des blocs de traversée de carte selon la revendication 1, dans laquelle S3 comprend spécifiquement :
S31, prise d'une position de grille dans le coin inférieur gauche de la carte de grille globale comme point original de référence, puis entrée dans S32 ;
S32, à partir du point original de référence, additionner une coordonnée du point original de référence sur l'axe des coordonnées verticales avec la longueur du côté du bloc de déplacement de la carte pour calculer et déterminer une coordonnée de cartographie d'un bloc de déplacement de la carte actuellement déterminé sur l'axe des coordonnées verticales, entre-temps, déterminer qu'une coordonnée de cartographie d'un bloc de déplacement de carte actuellement déterminé sur l'axe des coordonnées horizontales est égale à une coordonnée du point original de référence sur l'axe des coordonnées horizontales, puis entrer en S33, le point original de référence étant une position avec une valeur de coordonnées minimale sur chacun des axes de coordonnées globales de la carte de la grille globale ;
S33, déterminer si le nombre de blocs de déplacement dont les coordonnées de cartographie ont été déterminées dans la direction de l'axe des coordonnées verticales est inférieur au nombre de blocs de déplacement de la carte dans la direction de l'axe des coordonnées verticales de la carte à quadrillage global, dans le cas où les coordonnées de cartographie ont été déterminées dans la direction de l'axe des coordonnées verticales est inférieur au nombre de blocs de déplacement de la carte dans la direction de l'axe des coordonnées verticales de la carte à quadrillage global, entrer en S34, sinon entrer en S35 ;
S34, additionner la coordonnée de cartographie du bloc de déplacement de carte actuellement déterminé sur l'axe de coordonnées verticales avec la longueur latérale du bloc de déplacement de carte pour calculer et déterminer une coordonnée de cartographie d'un bloc de déplacement de carte adjacent dans la même direction de l'axe de coordonnées verticales sur l'axe de coordonnées verticales, entre-temps, déterminer qu'une coordonnée de cartographie du bloc de déplacement adjacent dans la même direction de l'axe de coordonnées verticales sur l'axe de coordonnées horizontales est identique à la coordonnée de cartographie du bloc de déplacement actuellement déterminé sur l'axe de coordonnées horizontales, puis revenir à S33, de sorte que les coordonnées de cartographie de chaque bloc de déplacement dans la même direction de l'axe de coordonnées verticales soient déterminées rangée par rangée sous un effet de contrainte d'un numéro de couverture dans la même direction de l'axe de coordonnées verticales ;
S35, additionner la coordonnée de cartographie du bloc de déplacement de carte actuellement déterminé sur l'axe de coordonnées horizontales avec la longueur latérale du bloc de déplacement de carte pour calculer et déterminer une coordonnée de cartographie du bloc de déplacement de carte adjacent dans la même direction de l'axe de coordonnées horizontales sur l'axe de coordonnées horizontales, entre-temps, déterminer qu'une coordonnée de cartographie du bloc de déplacement adjacent dans la même direction de l'axe des coordonnées horizontales sur l'axe des coordonnées verticales est identique à la coordonnée de cartographie du bloc de déplacement actuellement déterminé sur l'axe des coordonnées verticales, puis entrer en S36, de sorte que les coordonnées de cartographie de chaque bloc de déplacement dans la même direction de l'axe des coordonnées horizontales soient déterminées colonne par colonne sous un effet de contrainte d'un numéro de couverture dans la même direction de l'axe des coordonnées horizontales ;
S36, déterminer si le nombre de blocs de traversée de carte dont les coordonnées de cartographie ont été déterminées dans la direction de l'axe des coordonnées horizontales est inférieur au nombre de blocs de traversée de carte dans la direction de l'axe des coordonnées horizontales de la carte à quadrillage global ou non, dans le cas où le nombre de blocs de traversée de carte dont les coordonnées de cartographie ont été déterminées dans la direction de l'axe des coordonnées horizontales est inférieur au nombre de blocs de traversée de carte dans la direction de l'axe des coordonnées horizontales de la carte à quadrillage global, revenir à S33, sinon, déterminer que les coordonnées de cartographie de chaque bloc de déplacement dans la carte quadrillée globale ont été calculées ligne par ligne et colonne par colonne, de sorte que les blocs de déplacement sont établis dans chaque ligne et chaque colonne de la carte quadrillée globale, et qu'un traitement de bloc de la carte quadrillée globale est achevé.

5. Méthode pour établir des blocs de traversée de carte selon la revendication 1, dans laquelle S3 comprend spécifiquement :
S31, prendre la position de la grille dans le coin inférieur gauche de la carte de la grille mondiale comme point original de référence, puis entrer dans S32 ;
S32, à partir du point original de référence, additionner une coordonnée du point original de référence sur l'axe des coordonnées horizontales avec la longueur du côté du bloc de déplacement de la carte pour calculer et déterminer la coordonnée de cartographie du bloc de déplacement de la carte adjacent dans la même direction de l'axe des coordonnées horizontales sur l'axe des coordonnées horizontales, entre-temps, déterminer que la coordonnée de cartographie du bloc de déplacement de carte actuellement déterminé sur l'axe de coordonnées verticales est égale à la coordonnée du point d'origine de référence sur l'axe de coordonnées verticales, puis entrer en S33, le point d'origine de référence étant la position avec la valeur de coordonnées minimale sur chacun des axes de coordonnées globales de la carte de quadrillage globale ;
S33, évaluer si le nombre de blocs de traversée de carte dont les coordonnées de cartographie ont été déterminées dans la direction de l'axe des coordonnées horizontales est inférieur au nombre de blocs de traversée de carte dans la direction de l'axe des coordonnées horizontales de la carte à quadrillage global ou non, dans le cas où le nombre de blocs de traversée de carte dont les coordonnées de cartographie ont été déterminées dans la direction de l'axe des coordonnées horizontales est inférieur au nombre de blocs de traversée de carte dans la direction de l'axe des coordonnées horizontales de la carte à quadrillage global, entrer en S34, sinon, entrer en S35 ;
S34, additionner la coordonnée de cartographie du bloc de déplacement de carte actuellement déterminé sur l'axe de coordonnées horizontales avec la longueur latérale du bloc de déplacement de carte pour calculer et déterminer la coordonnée de cartographie du bloc de déplacement de carte adjacent dans la même direction de l'axe de coordonnées horizontales sur l'axe de coordonnées horizontales, entre-temps, déterminer que les coordonnées de cartographie du bloc de déplacement adjacent dans la même direction de l'axe des coordonnées horizontales sur l'axe des coordonnées verticales sont identiques aux coordonnées de cartographie du bloc de déplacement actuellement déterminé sur l'axe des coordonnées verticales, puis entrer en S33, de sorte que les coordonnées de cartographie de chaque bloc de déplacement dans la même direction de l'axe des coordonnées horizontales sont déterminées colonne par colonne sous l'effet de contrainte du numéro de couverture dans la même direction de l'axe des coordonnées horizontales ;
S35, additionner la coordonnée de cartographie du bloc de déplacement de carte actuellement déterminé sur l'axe de coordonnées verticales avec la longueur latérale du bloc de déplacement de carte pour calculer et déterminer la coordonnée de cartographie du bloc de déplacement de carte adjacent dans la même direction de l'axe de coordonnées verticales sur l'axe de coordonnées verticales, entre-temps, déterminer que les coordonnées de cartographie du bloc de déplacement adjacent dans la même direction de l'axe des coordonnées verticales sur l'axe des coordonnées horizontales sont identiques aux coordonnées de cartographie du bloc de déplacement actuellement déterminé sur l'axe des coordonnées horizontales, puis entrer en S36, de sorte que les coordonnées de cartographie de chaque bloc de déplacement dans la même direction de l'axe des coordonnées verticales sont déterminées rangée par rangée sous l'effet de la contrainte du numéro de couverture dans la même direction de l'axe des coordonnées verticales ;
S36, déterminer si le nombre de blocs de traversée de carte dont les coordonnées de cartographie ont été déterminées dans la direction de l'axe des coordonnées verticales est inférieur au nombre de blocs de traversée de carte dans la direction de l'axe des coordonnées verticales de la carte à quadrillage global ou non, dans le cas où le nombre de blocs de traversée de carte dont les coordonnées de cartographie ont été déterminées dans la direction de l'axe des coordonnées verticales est inférieur au nombre de blocs de traversée de carte dans la direction de l'axe des coordonnées verticales de la carte à quadrillage global, revenir à S33, sinon, déterminer que les coordonnées de cartographie de chaque bloc de déplacement dans la carte quadrillée globale ont été calculées ligne par ligne et colonne par colonne, de sorte que les blocs de déplacement sont établis dans chaque ligne et chaque colonne de la carte quadrillée globale, et que le traitement des blocs de la carte quadrillée globale est achevé.

6. Méthode pour établir des blocs de traversée de carte selon la revendication 4 ou 5, dans laquelle une coordonnée d'un point de grille parcouru par un robot sur l'axe de coordonnées verticales est supérieure ou égale à la coordonnée de cartographie du bloc de déplacement de la carte sur l'axe de coordonnées verticales ; la coordonnée du point de grille parcouru par le robot sur l'axe de coordonnées verticales est inférieure ou égale à un résultat obtenu en soustrayant un de la somme de la coordonnée de cartographie du bloc de déplacement de la carte sur l'axe de coordonnées verticales et de la longueur du côté du bloc de déplacement de la carte ; une coordonnée du point de grille traversé par le robot sur l'axe des coordonnées horizontales est supérieure ou égale à la coordonnée de cartographie du bloc de déplacement de la carte sur l'axe des coordonnées horizontales ; la coordonnée du point de grille traversé par le robot sur l'axe des coordonnées horizontales est inférieure ou égale à un résultat obtenu en soustrayant un de la somme de la coordonnée de cartographie du bloc de déplacement sur l'axe des coordonnées horizontales et de la longueur latérale du bloc de déplacement, et il est établi que le point de grille traversé par le robot est situé dans le bloc de déplacement.

7. Méthode pour établir des blocs de traversée de carte selon la revendication 6, dans laquelle, lorsqu'un robot de nettoyage traverse une grille dans le bloc de traversée de carte, un bloc de traversée de carte correspondant est marqué comme un bloc de traversée de carte traversé.

8. Puce dotée d'un programme de commande intégré, dans laquelle le programme de commande est configuré pour diviser une carte quadrillée globale construite par un robot mobile en temps réel en exécutant la méthode pour établir des blocs de traversée de carte selon l'une des revendications 1 à 7.

9. Robot mobile doté de la puce intégrée selon la revendication 8.
